# FASCICULE DE BREVET EUROPEEN

(11) **EP 3 397 122 B1**
(45) Date de publication et mention de la délivrance du brevet: **10.11.2021**
(21) Numéro de dépôt: 16782285.7
(22) Date de dépôt: 19.10.2016
(51) Int. Cl.: A47C 23/043, A47C 27/06, F16F 1/42

(54) **TRAVERSE À RESSORTS EN PARTICULIER POUR SOMMIER DE LIT ET SOMMIER DE LIT ÉQUIPÉ DE TRAVERSES À RESSORTS**
GEFEDERTER QUERTRÄGER, INSBESONDERE FÜR EINEN BETTKASTEN, UND BETTKASTEN MIT GEFEDERTEN QUERTRÄGERN
SPRUNG CROSSPIECE, IN PARTICULAR FOR A BED BASE, AND BED BASE EQUIPPED WITH SPRUNG CROSSPIECES

(30) Priorité: 28.12.2015 EP 15202830
(43) Date de publication de la demande: 07.11.2018
(73) Titulaire: Elite SA, 1170 Aubonne (CH)
(72) Inventeur: RHÊME, Martin, 1752 Villars-sur-Glâne (CH); MAILLARD, Denis, 2718 Lajoux (CH)
(74) Mandataire: KATZAROV S.A.
(86) Numéro de dépôt international: PCT/EP2016/075099
(87) Numéro de publication internationale: WO 2017/114604

(56) Documents cités:
- EP-A2- 0 653 174
- JP-A- 2011 093 249
- US-A- 18 630

## Description

### Domaine technique

La présente invention à trait notamment au domaine de la literie. Elle concerne plus particulièrement un procédé de fabrication d'une traverse à ressorts.

### Etat de la technique

Les sommiers conventionnels sont des sommiers à lattes s'étendant transversalement par rapport à l'axe longitudinal du sommier et qui sont généralement fixées sur des longerons de cadre de sommier par l'intermédiaire d'embouts munis de logements destinés à l'encastrement de leurs extrémités. Ces embouts supportent la plupart du temps une ou deux lattes et permettent, par leur souplesse, la mobilité verticale des lattes ainsi que leur pivotement par rapport à leur axe longitudinal. L'inconvénient de ces sommiers réside dans la déformation des lattes qui se propage au-delà du profil anatomique de chaque utilisateur ce qui ne permet pas d'avoir un soutien optimal de celui-ci.

On connait de l'état de la technique des moyens coulissant, en forme de curseurs, qui permettent le réglage de la flexibilité des lattes supportant le matelas afin d'adapter le sommier à un utilisateur particulier. Un tel curseur variateur de tension est par exemple décrit dans le document FR2633171. Ces curseurs présentent toutefois le désavantage d'être relativement difficile à manipuler rendant un réglage adéquat fastidieux. Par ailleurs, bien que ce type de curseur permet d'améliorer le soutien de l'utilisateur, il n'est pas pour autant optimal. Des traverses à ressorts sont aussi connues de EP0653 174 A2 et US18630 A.

### Divulgation de l'invention

A titre d'exemple ne faisant pas partie de la présente invention mais permettant de mieux la comprendre, il est donc de proposer une traverse à ressorts en particulier pour sommier de lit ainsi qu'un sommier de lit, comportant des traverses à ressorts, qui est capable d'épouser et de maintenir dans une position idéale, pendant le sommeil, n'importe quel utilisateur indépendamment de son profil anatomique.

A cet effet, le présent exemple concerne plus particulièrement une traverse à ressorts, de préférence en bois, en particulier pour sommier de lit, la traverse à ressorts comprenant une latte, et étant caractérisée en ce que :
- plusieurs blocs ajourés sont agencés les uns à côté des autres le long de la latte, la base de chaque bloc étant solidaire de ladite latte, et
- chaque bloc est compressible et comporte à cet effet des découpes ménageant des espaces vides en son sein à différentes hauteurs afin de permettre un affaissement de son volume par compression des espaces vides, les découpes étant parallèles les unes par rapport aux autres lorsque le bloc est dans une position passive, i.e. lorsqu'aucune contrainte est exercée sur celui-ci.

L'invention concerne un procédé de fabrication de la traverse à ressorts décrite ci-dessus qui est obtenue à partir d'une barre, de préférence en bois, de section transversale rectangulaire. Le procédé comporte les deux étapes suivantes effectuées dans un ordre quelconque :
- usiner les deux cotés longitudinaux de la barre au moyen d'une scie circulaire afin d'obtenir plusieurs découpes de forme partiellement circulaire réparties en quinconce sur chaque côté longitudinal de la barre selon un plan de coupe parallèle à la surface supérieure de celle-ci. La répartition des découpes est identique sur chacun des cotés longitudinaux de la barre afin que chaque découpe de l'un de ces côtés soit agencée en regard d'une découpe correspondante de l'autre de ces côtés. Les découpes opposées se chevauchent partiellement dans le plan de la coupe afin d'obtenir des découpes réparties en quinconce traversant la barre de part en part selon le plan de coupe.
- usiner plusieurs évidements traversant la barre de part en part selon un axe perpendiculaire à l'axe longitudinal de la barre à des intervalles constants le long de celle-ci de manière à former les blocs de la traverse à ressorts.

Un exemple ne faisant pas partie de l'invention concerne en outre un sommier de lit comportant plusieurs traverses à ressorts dont chacune présente les caractéristiques ci-dessus. Les traverses sont agencées transversalement par rapport à l'axe longitudinal du sommier et sont espacées les unes par rapport aux autres d'une distance suffisante pour permettre un débattement de chaque bloc de part et d'autre de l'axe longitudinal de la traverse correspondante.

Le sommier ainsi obtenu à pour avantage d'incorporer des ressorts totalement indépendant les uns des autres garantissant une suspension optimale permettant un soutient bloc par bloc de chaque traverse.

Enfin, un exemple ne faisant pas partie de l'invention concerne par ailleurs un lit comportant un cadre de lit supportant le sommier, un matelas ainsi qu'un rembourrage disposé entre le matelas et le sommier. Le rembourrage recouvre l'intégralité du sommier afin d'empêcher la remontée d'un chauffage au sol et permet ainsi de conserver une température adéquate du matelas.

Selon une forme d'exécution préférentielle de ces exemples, les traverses à ressorts du sommier sont fabriquées intégralement à partir de différentes essences de bois qui offre des caractéristiques de confort et de résistance similaires aux ressort métalliques. Par ailleurs, le rembourrage disposé entre le matelas et le sommier est entièrement naturel et se compose de préférence de jute, de laine de mouton et de coutil. Le lit ainsi obtenu est fabriqué entièrement à partir de matière premières naturelles et présente de ce fait l'avantage d'être recyclable à 100%.

### Brève description des dessins

D'autres caractéristiques et avantages de l'invention apparaitront plus clairement à la lecture de la description d'une forme d'exécution préférentielle qui suit en référence aux figures annexées donnés à titres d'exemples non limitatifs et dans lesquelles :
- la figure 1 représente une vue en perspective de la traverse à ressorts selon le mode de réalisation préféré de l'exemple ne faisant pas partie de l'invention,
- la figure 2 représente une vue en perspective de deux blocs adjacents de la traverse à ressorts de la figure 1,
- la figure 3 représente un lit comportant un sommier pourvu d'une multitude de traverses à ressorts qui sont identiques à la traverse de la figure 1 et dont certaines sont recouverte, au moins partiellement, du rembourrage,
- la figure 4 représente une vue en perspective d'une barre en bois de section transversale rectangulaire, à partir de laquelle la traverse de la figure 1 est obtenue, au cours d'une opération d'usinage,
- la figure 5 représente la barre en bois après l'opération d'usinage des découpes ménageant des espaces vides en son sein traversant la barre de part en part selon le plan de coupe et avant l'opération d'usinage des blocs de la traverse de la figure 1, et
- la figure 6 représente une vue similaire à la figure 5 dans laquelle une couche supérieure de la barre a été retirée à des fins de clarifications.

### Mode de réalisation préféré de l'invention

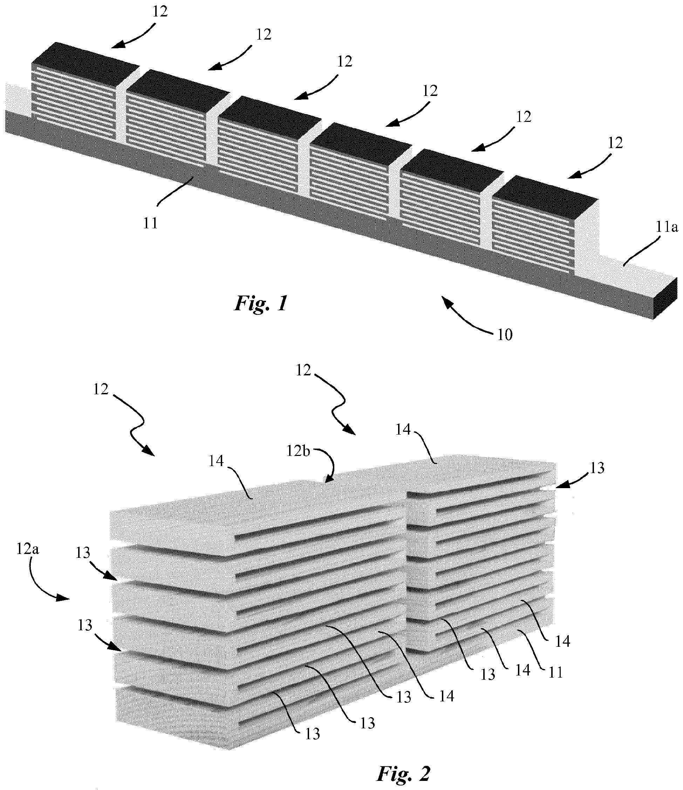

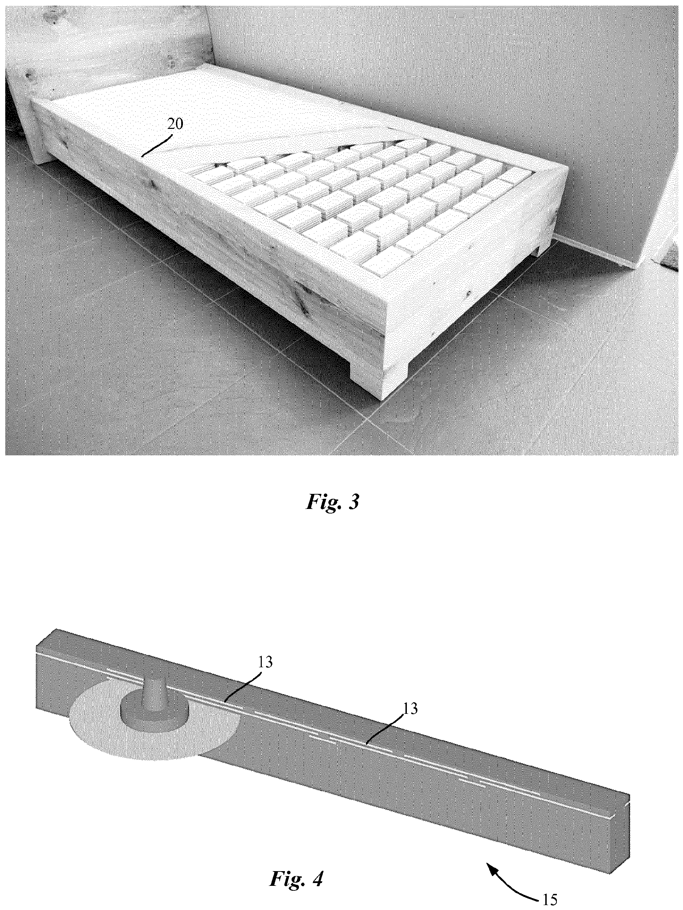

En référence à la figure 3, le sommier est composé de plusieurs traverses à ressorts agencées transversalement par rapport à l'axe longitudinal du sommier. Chaque traverse à ressorts 10 telle qu'illustrée plus particulièrement par la figure 1 est intégralement réalisée à partir de différentes essences de bois et comprend une latte 11 rectiligne et rigide de section transversale rectangulaire et dont les extrémités sont destinées à coopérer avec le cadre de lit 20 de la figure 3. Selon la figure 1, six blocs ajourés 12, dont l'enveloppe externe possède une forme générale de parallélépipède rectangle de préférence (la forme générale d'un cube pouvant toutefois être envisagée), sont agencés les uns à côté des autres le long de la latte 11. Les six blocs 12 sont solidaires de celle-ci au niveau de leurs bases respectives. Chaque bloc 12 est compressible et comporte à cet effet des découpes ménageant des espaces vides en son sein à différentes hauteurs afin de permettre un affaissement de son volume par compression des espaces vides.

Comme on peut le voir plus précisément à la figure 2, plusieurs découpes 13, dans le cas présent onze, sont superposées au sein de chaque bloc 12 selon un plan parallèle par rapport à la face supérieure 11a de la latte 11 (Figure 1). Chacune de ces découpes 13 commence à partir de l'un et l'autre des côtés latéraux 12a, 12b du bloc 12 en alternance et s'arrête à une distance proche du côté latéral opposé respectif tout en étant suffisamment éloigné de ce dernier pour assurer une rigidité adéquate du bloc. Le bloc ainsi obtenu s'apparente à un ressort serpentin en bois d'un seul tenant présentant une succession de lamelles 14 parallèles, possédant une épaisseur identique comprise entre 1 et 8 mm, de préférence entre 3,5 et 4 mm, en alternance avec les découpes 13 aménageant des espaces vides d'une épaisseur comprise entre 1 et 10 mm, de préférence entre 3 et 3.5 mm lorsque le bloc est dans une position passive.

Les six blocs ajourés 12 de la traverse 10 de la figure 1 sont en outre configurés pour permettre un débattement latéral de chaque bloc 12 au cours de sa compression. Les six blocs sont à cet effet séparés les uns par rapport aux autres d'une distance identique, comprise de préférence entre 15 et 20 mm, afin de permettre un débattement latéral de chaque bloc 12.

Par ailleurs, en référence à la figure 3, les traverses à ressorts du sommier sont espacées les unes par rapport aux autres d'une distance adéquate pour permettre un débattement suffisant de chacun des six blocs de part et d'autre de l'axe longitudinal de la traverse correspondante tout en conservant une soutient optimal du sommier.

La répartition et les caractéristiques de chaque bloc tel que décrit ci-dessus permettent à celui-ci de subir les mouvements suivants :
- une compression selon un axe perpendiculaire au plan défini par la surface du sommier (ci-après axe de compression),
- un débattement dans deux directions perpendiculaire l'une par rapport à l'autre comme décrit précédemment,
- une torsion selon l'axe de compression du bloc, et

Chaque bloc peut ainsi prendre une orientation multidirectionnelle en fonction du type de pression exercée sur celui-ci. Une suspension optimale permettant un soutient adéquat bloc par bloc de chaque traverse est ainsi obtenue.

Comme illustré par la figure 3, les blocs de chaque traverse sont alignés aux blocs de la traverse adjacente de sorte à former un sommier de lit comportant six rangées de blocs dans le sens de la longueur du sommier. Selon une variante, les blocs de chaque traverse sont agencés par rapport aux blocs de la traverse adjacente de sorte à obtenir une répartition en quinconce des blocs.

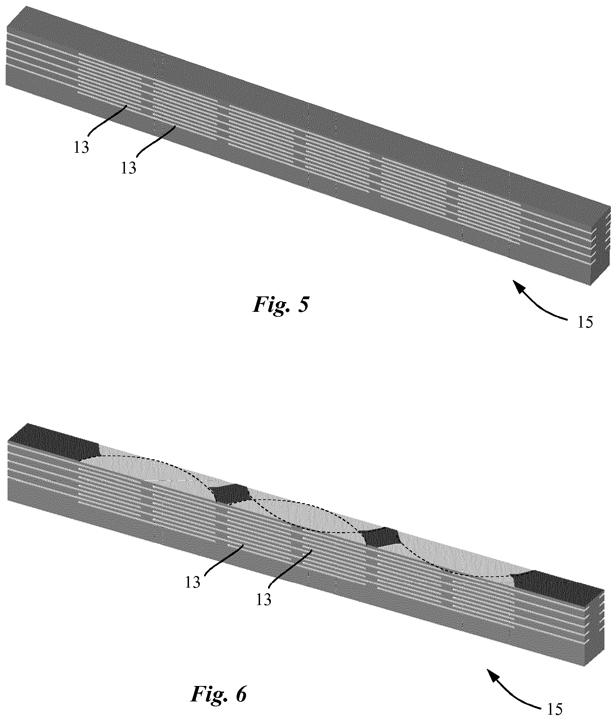

La traverse à ressorts selon la figure 1 est obtenue à partir d'une barre 15 en bois de section transversale rectangulaire. Les deux cotés longitudinaux de la barre 15 sont usinés au moyen d'une scie circulaire, comme on peut le voir à la figure 4, afin d'obtenir plusieurs découpes de forme partiellement circulaire (figure 6). En référence à la figure 5, les découpes sont réparties en quinconce sur chaque côté longitudinal de la barre 15 selon un plan de coupe parallèle à la surface supérieure de celle-ci. La répartition des découpes est identique sur chacun des cotés longitudinaux de la barre 15 afin que chaque découpe de l'un de ces côtés longitudinaux soit agencée en regard d'une découpe correspondante de l'autre de ces côtés longitudinaux. Les découpes opposées se chevauchent partiellement dans le plan de la coupe afin d'obtenir des découpes réparties en quinconce traversant la barre 15 de part en part selon le plan de coupe. Comme on peut le voir à la figure 6, les découpes on une surface substantiellement rectangulaire.

Cinq évidements sont ensuite pratiqués à des intervalles réguliers le long de la barre 15 de sorte à traverser celle-ci de part en part le long d'un axe perpendiculaire à son axe longitudinal. La largeur de chaque évidement est constante le long de cet axe perpendiculaire et est comprise de préférence entre 15 et 20 mm de manière à former les blocs 12 de la traverse à ressorts 10 de la figure 1.

Les blocs ajourés 12 obtenus par ce procédé de fabrication ont la particularité d'être agencés de sorte à ce que deux blocs adjacents quelconques parmi l'ensemble des blocs 12 de la traverse 10 soient toujours symétriques selon un plan qui est parallèle aux côtés latéraux se faisant face des deux blocs 12 et qui situé entre ces derniers.

La description qui précède s'attache à décrire un mode de réalisation particulier, l'invention n'étant pas limitée à la mise en œuvre de certaines caractéristiques particulières qui viennent d'être décrites comme par exemple le nombre de découpes par bloc et le nombre de blocs par traverse. L'homme du métier ne rencontrera pas de difficulté particulière pour adapter le contenu de la présente divulgation à ses propres besoins en particulier pour un sommier de lit sans sortir du cadre de la présente invention. L'homme du métier cherchera par exemple soit à diminuer le nombre de découpe de chaque bloc afin d'obtenir un sommier qui présente une plus grande fermeté, soit à augmenter le nombre de ces découpes afin d'obtenir un sommier présentant une plus grande souplesse.

Par ailleurs, bien que l'invention est particulièrement adaptée pour la fabrication de la traverse à ressorts à partir de matériaux en bois, aussi bien massif que laqué, l'homme du métier pourra envisager l'utilisation d'autres matériaux pour la fabrication de la traverse à ressorts tels que des matériaux polymères.

Enfin, la traverse à ressort selon l'exemple ne faisant pas partie de l'invention n'est pas exclusivement adaptée pour un sommier de lit. Les dimensions de la traverse peuvent en effet être modifiées pour obtenir une structure amortissante qui peut être incorporée dans tout type de meuble rembourré tel qu'un fauteuil, un sofa ou un pouf. A cet effet, la structure amortissante comporte au moins une traverse à ressorts selon l'exemple ne faisant pas partie de l'invention.

## Revendications

1. Procédé de fabrication d'une traverse à ressorts (10), obtenue à partir d'une barre (15), de préférence en bois et de section transversale rectangulaire, le procédé comportant les deux étapes suivantes effectuées dans un ordre quelconque :
- usiner les deux cotés longitudinaux de la barre (15) au moyen d'une scie circulaire afin d'obtenir plusieurs découpes, de forme partiellement circulaire, réparties en quinconce sur chaque côté longitudinal de la barre (15) selon un plan de coupe parallèle à la surface supérieure de celle-ci, la répartition des découpes étant identique sur chacun des cotés longitudinaux de la barre (15) afin que chaque découpe de l'un de ces côtés longitudinaux soit agencée en regard d'une découpe correspondante de l'autre de ces côtés longitudinaux afin d'obtenir des découpes réparties en quinconce traversant la barre de part en part selon le plan de coupe, et
- usiner plusieurs évidements traversant la barre (15) de part en part selon un axe perpendiculaire à l'axe longitudinal de la barre (15) à des intervalles constants le long de celle-ci de manière à former les blocs (12) de la traverse à ressorts (10).

2. Procédé de fabrication selon la revendication 1, dans lequel les découpes en regard l'une de l'autre se chevauchent partiellement dans le plan de la coupe.

## Patentansprüche

1. Verfahren zur Herstellung eines gefederten Querträgers (10), der aus einem Balken (15), bevorzugt aus Holz und mit rechteckigem Querschnitt, erhalten wird, wobei das Verfahren die beiden folgenden, in einer beliebigen Reihenfolge ausgeführten Schritte umfasst:
- Bearbeiten der beiden Längsseiten des Balkens (15) mit einer Kreissäge, um mehrere teilweise kreisförmige Schnitte zu erhalten, die versetzt auf jeder Längsseite des Balkens (15) entlang einer parallel zu dessen Oberfläche verlaufenden Schnittebene verteilt sind, wobei die Verteilung der Schnitte auf jeder der Längsseiten des Balkens (15) identisch ist, damit jeder Schnitt einer dieser Längsseiten gegenüber einem entsprechenden Schnitt der anderen dieser Längsseiten angeordnet ist, um versetzt verteilte Schnitte zu erhalten, die den Balken entlang der Schnittebene von einer Seite zur anderen durchdringen, und
- Bearbeiten mehrerer Ausnehmungen, die den Balken (15) von einer Seite zur anderen entlang einer senkrecht zur Längsachse des Balkens (15) verlaufenden Achse in konstanten Abständen entlang dieser durchdringen, so dass Blöcke (12) des gefederten Querträgers (10) gebildet werden.

2. Herstellungsverfahren nach Anspruch 1, bei dem die einander gegenüber liegenden Schnitte sich in der Schnittebene teilweise überlappen.

## Claims

1. A method for manufacturing a spring cross member (10), obtained from a bar (15), preferably made of wood and of rectangular cross section, the method including the following two steps carried out in any order:
- machining the two longitudinal sides of the bar (15) using a circular saw in order to obtain several cuts, partially circular in shape, distributed in staggered rows on each longitudinal side of the bar (15) according to a cutting plane parallel to the upper surface thereof, the distribution of the cuts being identical on each of the longitudinal sides of the bar (15) so that each cut of one of these longitudinal sides is arranged opposite a corresponding cut of the other of these longitudinal sides in order to obtain cuts distributed in staggered rows crossing the bar right through according to the cutting plane, and
- machining several recesses passing through the bar (15) right through along an axis perpendicular to the longitudinal axis of the bar (15) at constant intervals along the latter so as to form the blocks (12) of the spring cross member (10).

2. The manufacturing method according to claim 1, wherein the cuts facing one another partially overlap in the plane of the section.
